(19) Europäisches Patentamt
European Patent Office
Office européen des brevets

(11) EP 3 872 906 B1

(12) **EUROPEAN PATENT SPECIFICATION**

(45) Date of publication and mention of the grant of the patent:
**23.08.2023 Bulletin 2023/34**

(21) Application number: **20845138.5**

(22) Date of filing: **22.10.2020**

(51) International Patent Classification (IPC):
***H01M 4/62*** *(2006.01)* ***C08F 220/06*** *(2006.01)*
***H01M 4/13*** *(2010.01)* ***H01M 4/139*** *(2010.01)*
***H01M 4/38*** *(2006.01)* ***H01M 4/134*** *(2010.01)*
***H01M 10/0525*** *(2010.01)* ***C09D 133/26*** *(2006.01)*
*H01M 4/02 (2006.01)*

(52) Cooperative Patent Classification (CPC):
(C-Sets available)
**H01M 4/622; C08F 220/06; C09D 133/26; H01M 4/134; H01M 4/386; H01M 4/62; H01M 10/0525;** H01M 2004/027; Y02E 60/10

(Cont.)

(86) International application number:
**PCT/JP2020/039637**

(87) International publication number:
**WO 2021/131278 (01.07.2021 Gazette 2021/26)**

(54) **NONAQUEOUS SECONDARY BATTERY ELECTRODE, ELECTRODE SLURRY, AND NONAQUEOUS SECONDARY BATTERY**

WASSERFREIE SEKUNDÄRBATTERIE-ELEKTRODE, ELEKTRODENAUFSCHLÄMMUNG UND WASSERFREIE SEKUNDÄRBATTERIE

ÉLECTRODE DE BATTERIE SECONDAIRE NON AQUEUSE, PÂTE D’ÉLECTRODE ET BATTERIE SECONDAIRE NON AQUEUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2019 JP 2019233082**

(43) Date of publication of application:
**01.09.2021 Bulletin 2021/35**

(73) Proprietor: **Resonac Corporation**
**Tokyo (JP)**

(72) Inventors:
- **KAWAHARA, Yuta**
  **Minato-ku, Tokyo 1058518 (JP)**
- **KURATA, Tomonori**
  **Minato-ku, Tokyo 1058518 (JP)**
- **HANASAKI, Mitsuru**
  **Minato-ku, Tokyo 1058518 (JP)**

(74) Representative: **Strehl Schübel-Hopf & Partner**
**Maximilianstrasse 54**
**80538 München (DE)**

(56) References cited:
**WO-A1-2015/146648**
**WO-A1-2015/178241**
**JP-A- 2001 064 472**
**JP-A- 2001 131 530**
**JP-A- 2002 117 860**
**JP-A- 2002 279 980**
**JP-A- 2013 149 396**
**JP-A- 2014 203 555**
**JP-A- 2015 153 529**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 220/06, C08F 220/06, C08F 226/02;**
**C08F 220/06, C08F 226/02**

**Description**

TECHNICAL FIELD

The present invention relates to a nonaqueous secondary battery electrode, an electrode slurry, and a nonaqueous secondary battery.

BACKGROUND ART

A secondary battery using a nonaqueous electrolyte (nonaqueous secondary battery) is superior to a secondary battery using an aqueous electrolyte in terms of high voltage, miniaturization, and weight reduction. For this reason, the nonaqueous secondary battery is widely used as power sources for notebook PCs, mobile phones, power tools, and electronic and communication devices. In recent years, the secondary nonaqueous battery has also been used for electric vehicles and hybrid vehicles from the viewpoint of environmentally friendly vehicle application, but there is a strong demand for higher output, higher capacity, and longer life. A lithium ion secondary battery is a representative example of the nonaqueous secondary battery.

The nonaqueous secondary battery includes a positive electrode using a metal oxide or the like as an active material, a negative electrode using a carbon material such as graphite or the like as an active material, and a nonaqueous electrolyte solvent mainly containing carbonates or flame-retardant ionic liquids. The nonaqueous secondary battery is a secondary battery in which the battery is charged and discharged by the movement of ions between a positive electrode and a negative electrode. Specifically, the positive electrode is obtained by coating a slurry comprising a metal oxide and a binder on a surface of a positive electrode current collector such as an aluminum foil, drying the slurry, and cutting the electrode current collector into an appropriate size. The negative electrode is obtained by coating a slurry comprising a carbon material and a binder on a surface of a negative electrode current collector such as a copper foil, drying the slurry, and cutting the electrode current collector into an appropriate size. The binder serves to bond the active materials to each other and to bond the active material to the current collector in the positive electrode or the negative electrode, thereby preventing the active material from being separated from the current collector.

As a binder, a polyvinylidene fluoride (PVDF) binder containing an organic solvent N-methyl-2-pyrrolidone (NMP) as a solvent is well known. However, the binder has low bonding properties between the active materials and between the active material and the current collector, and a large amount of binder is required for actual use. Therefore, there is a disadvantage that the capacity of the nonaqueous secondary battery is reduced. Further, since NMP, which is an expensive organic solvent, is used in the binder, it is difficult to suppress the manufacturing cost.

Patent Document 1 discloses a composite ink for forming a secondary battery electrode containing carboxymethyl cellulose, a water-dispersible binder and water. Patent Document 2 discloses a binder for a nonaqueous battery electrode containing a sodium acrylate-N-vinylacetamide copolymer (copolymerization ratio: sodium acrylate/N-vinylacetamide = 10/90 by mass).

[Patent Document]

[Patent Document 1] Japanese Patent Application Laid-Open No. 2015-023015
[Patent Document 2] WO 2017/150200

SUMMARY OF INVENTION

[Problem to be Solved by the Invention]

The water-dispersible binder disclosed in Patent Document 1 requires the use of carboxymethyl cellulose as a thickener in combination, and the slurry preparation process is complicated. In addition, in this binder, the bonding properties between the active materials and between the active materials and the current collector are insufficient, and when the electrode is produced with a small amount of binder, a part of the active material is peeled off in the process of cutting the current collector.

The sodium acrylate-N-vinylacetamide copolymer disclosed in Patent Document 2 has a problem that cracks are generated frequently in an electrode having a large film thickness, that is, a large weight per area.

It is an object of the present invention to provide a nonaqueous secondary battery electrode, which have an electrode active material layer having little cracks and high peel strength to a current collector, and which can obtained a battery having low internal resistance and high cycle capacity retention rate; and to provide an electrode slurry for the

nonaqueous secondary battery electrode, and a nonaqueous secondary battery.

[Means to Solve the Problem]

In order to solve the above problem, the present invention is as follows [1] to [15].

[1] A nonaqueous secondary battery electrode comprising

a current collector and
an electrode active material layer formed on a surface of the current collector,
wherein the electrode active material layer comprises an electrode active material (A), a copolymer (P), a nonionic surfactant (B), and a cellulose derivative (C);
the copolymer (P) comprises a structural unit (p1) derived from a (meth)acrylic acid salt and a structural unit (p2) derived from a compound represented by general formula (1);
in the copolymer (P), a content of the structural unit (p1) is 50 % by mass or more and 99 % by mass or less;
in the copolymer (P), a content of the structural unit (p2) is 0.50 % by mass or more and 30 % by mass or less;
a content of the nonionic surfactant (B) with respect to 100 parts by mass of the copolymer (P) is 5.0 parts by mass or more and 350 parts by mass or less; and
a content of the cellulose derivative (C) with respect to 100 parts by mass of the copolymer (P) is 10 parts by mass or more and 350 parts by mass,

[Chemical formula 1]

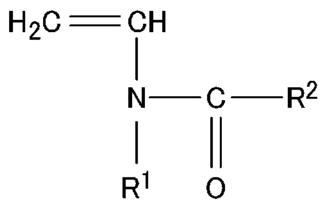

・・・(1)

wherein in the formula, $R^1$ and $R^2$ each independently represent a hydrogen atom or an alkyl group having 1 to 5 carbon atoms.

[2] The nonaqueous secondary battery electrode according to [1], wherein the copolymer (P) is a water-soluble polymer compound.
[3] The nonaqueous secondary battery electrode according to [1] or [2], wherein a content of the electrode active material (A) in the electrode active material layer is 90 % by mass or more and 99 % by mass or less.
[4] The nonaqueous secondary battery electrode according to any one of [1] to [3], wherein the electrode active material (A) comprises silicon.
[5] The nonaqueous secondary battery electrode according to any one of [1] to [4], wherein a content of the copolymer (P) in the electrode active material layer is 0.15 % by mass or more and 8.5 % by mass or less.
[6] The nonaqueous secondary battery electrode according to any one of [1] to [5], wherein the nonionic surfactant (B) has a segment composed of an ethylene oxide structure.
[7] The nonaqueous secondary battery electrode according to any one of [1] to [6], wherein a HLB value of the nonionic surfactant (B) obtained by the glyphin method is 8.0 or more and 19 or less.
[8] The nonaqueous secondary battery electrode according to any one of [1] to [7], wherein the cellulose derivative (C) is carboxymethyl cellulose or a metal salt thereof.
[9] The nonaqueous secondary battery electrode according to [8], wherein a degree of etherification of the carboxymethyl cellulose or its metal salt is 0.5 or more and 1.8 or less.
[10] The nonaqueous secondary battery electrode according to any one of [1] to [9], wherein a weight-average molecular weight of the copolymer (P) is in the range of 1.0 million to 5.0 million.
[11] The nonaqueous secondary battery electrode according to any one of [1] to [10], wherein the copolymer (P) further comprises a structural unit (p3) derived from (meth)acrylic acid, and
a content of the structural unit (p3) in the copolymer (P) is 1.0 % by mass or more and 30 % by mass or less.
[12] A nonaqueous secondary battery comprising the nonaqueous secondary battery electrode according to any one of [1] to [11] as a negative electrode.
[13] The nonaqueous secondary battery according to [12], wherein the nonaqueous secondary battery is a lithium

ion secondary battery.

[14] An electrode binder composition comprising a copolymer (P), a nonionic surfactant (B), a cellulose derivative (C), and an aqueous solvent,

wherein the copolymer (P) comprises a structural unit (p1) derived from a (meth)acrylic acid salt and a structural unit (p2) derived from a compound represented by general formula (1);
in the copolymer (P), a content of the structural unit (p1) is 50 % by mass or more and 99 % by mass or less;
in the copolymer (P), a content of the structural unit (p2) is 0.50 % by mass or more and 30 % by mass or less;
a content of the nonionic surfactant (B) with respect to 100 parts by mass of the copolymer (P) is 5.0 parts by mass or more and 350 parts by mass or less; and
a content of the cellulose derivative (C) with respect to 100 parts by mass of the copolymer (P) is 10 parts by mass or more and 350 parts by mass or less,

[Chemical formula 2]

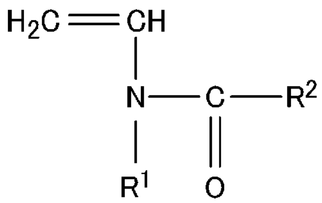

··· (1)

wherein in the formula, $R^1$ and $R^2$ each independently represent a hydrogen atom or an alkyl group having 1 to 5 carbon atoms.

[15] An electrode slurry comprising an electrode active material (A), a copolymer (P), a nonionic surfactant (B), a cellulose derivative (C), and an aqueous medium,

wherein the copolymer (P) comprises a structural unit (p1) derived from a (meth)acrylic acid salt and a structural unit (p2) derived from a compound represented by general formula (1);
in the copolymer (P), a content of the structural unit (p1) is 50 % by mass or more and 99 % by mass or less;
in the copolymer (P), a content of the structural unit (p2) is 0.50 % by mass or more and 30 % by mass or less;
a content of the nonionic surfactant (B) with respect to 100 parts by mass of the copolymer (P) is 5.0 parts by mass or more and 350 parts by mass or less; and
a content of the cellulose derivative (C) with respect to 100 parts by mass of the copolymer (P) is 10 parts by mass or more and 350 parts by mass or less,

[Chemical formula 3]

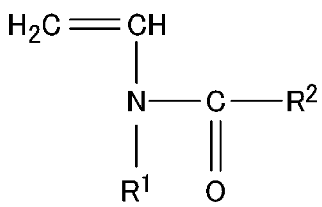

··· (1)

wherein in the formula, $R^1$ and $R^2$ each independently represent a hydrogen atom or an alkyl group having 1 to 5 carbon atoms.

[Effect of the Invention]

According to the present invention, it is possible to provide a nonaqueous secondary battery electrode which has an electrode active material layer having little crack and high peel strength to a current collector, and which can obtain a battery having low internal resistance and high cycle capacity retention rate; an electrode slurry for the nonaqueous secondary battery electrode; and a nonaqueous secondary battery.

DESCRIPTION OF EMBODIMENTS

Hereinafter, embodiments of the present invention will be described in detail. In the present embodiment, the nonaqueous secondary battery is a secondary battery accompanied by the transfer of ions serving as charge carriers between the positive electrode and the negative electrode in charge/discharge. The positive electrode includes a positive electrode active material, and the negative electrode includes a negative electrode active material. These electrode active materials are materials capable of ion insertion (intercalation) and ion desorption (deintercalation). A preferred example of a secondary battery having such a configuration is a lithium-ion secondary battery.

In the following description, "surface" means "hyomen (surface)" unless otherwise specified.

"(Meth)acrylic acid" refers to one or both of methacrylic acid and acrylic acid. "(Meth)acrylic acid monomer" refers to one or both of a methacrylic acid monomer and an acrylic acid monomer. "(Meth)acrylate" refers to one or both of methacrylate and acrylate.

"Non-volatile component" contained in a mixture (for example, slurry or composition) means a component which has a boil point at 1 atm (1013 hPa) of a temperature 130°C or higher. "Non-volatile concentration" of a mixture means a ratio (% by mass) of the component contained in the mixture which have a boiling point at 1 atm (1013 hPa) of 130°C or higher.

<1. Nonaqueous Secondary Battery Electrode>

The nonaqueous secondary battery electrode (hereinafter sometimes referred to as "electrode") according to the present embodiment includes a current collector and an electrode active material layer formed on the surface of the current collector. The shape of the electrode may be, for example, a laminate or a wound body, but is not particularly limited.

[1-1. Current Collector]

The current collector is preferably a sheet-like metal having a thickness of 0.001 to 0.5 mm, and examples of the metal include iron, copper, aluminum, nickel, stainless steel, and the like. When the nonaqueous secondary battery electrode is the negative electrode of the lithium ion secondary battery, the current collector is preferably a copper foil.

[1-2. Electrode Active Material Layer]

The electrode active material layer of the present embodiment includes an electrode active material (A), a copolymer (P), a nonionic surfactant (B), and a cellulose derivative (C).

[1-2-1. Electrode Active Material (A)]

The electrode active material (A) is a material capable of intercalating and deintercalating ions serving as charge carriers. For example, if the charge carrier is a lithium ion, the nonaqueous secondary battery becomes a lithium ion secondary battery. In the electrode active material layer, the content of the electrode active material (A) is preferably 85 % by mass or more, more preferably 90 % by mass or more, and still more preferably 92 % by mass or more. This is to increase the charge carrier intercalation/deintercalation capacity to the electrode and to increase the charge/discharge capacity of the nonaqueous secondary battery.

In the electrode active material layer, a content of the electrode active material (A) is preferably 99 % by mass or less, more preferably 98 % by mass or less, and still more preferably 97 % by mass or less. This is because a copolymer (P), a nonionic surfactant (B), and a cellulose derivative (C), which will be described later, can be contained in the electrode active material layer (The effect will be described later.).

(Negative Electrode Active Material)

When the nonaqueous secondary battery electrode is the negative electrode of the lithium ion secondary battery, examples of the negative electrode active material include a conductive polymer, a carbon material, lithium titanate, silicon, a silicon compound, and the like. Examples of the conductive polymer include polyacetylene and polypyrrole. Examples of carbon materials include coke such as petroleum coke, pitch coke, coal coke or the like; carbides of organic compounds; graphite such as artificial graphite, natural graphite or the like; and the like. Examples of the silicon compound include $SiO_x$ ($0.1 \leq x \leq 2.0$) and the like. As the negative electrode active material, two or more of the materials mentioned above may be combined.

The negative electrode active material preferably contains silicon. This is because the charge-discharge capacity of the nonaqueous secondary battery increases. As the negative electrode active material containing silicon, in addition

to the silicon and the silicon compound described above, a composite material of these and other materials can be used. As the composite material for the negative electrode active material, a composite material of silicon and a carbon material (Si/Graphite) is preferably used.

In addition, when the material is a carbon material such as coke, carbides of organic compounds, graphite, or the like; or a silicon-containing material such as $SiO_x$ ($0.1 \leq x \leq 2.0$), silicon, Si/graphite, or the like, the effect of improving the bonding property of the negative electrode active material by the copolymer (P) is remarkable. For example, a specific example of artificial graphite is SCMG (registered trademark)-XRs (manufactured by Showa Denko K.K.).

(Positive Active Material)

When the nonaqueous secondary battery electrode is the positive electrode of a lithium ion secondary battery, examples of the positive electrode active material include lithium cobaltate ($LiCoO_2$), nickel-containing lithium complex oxide, spinel type lithium manganate ($LiMn_2O_4$), olivine type lithium iron phosphate, and chalcogen compounds such as $TiS_2$, $MnO_2$, MoOs, $V_2O_5$, or the like. The positive electrode active material may contain either one of these compounds alone or a plurality of compounds. Other alkali metal oxides may also be used. Examples of the nickel-containing lithium complex oxide include a Ni-Co-Mn lithium based complex oxide, a Ni-Mn-Al lithium complex oxide, a Ni-Co-Al lithium complex oxide and the like. Specific examples of the positive electrode active material include $LiNi_{1/3}Mn_{1/3}Co_{1/3}O_2$, $LiNi_{3/5}Mn_{1/5}Co_{1/5}$, and the like.

[1-2-2 Copolymer (P)]

The copolymer (P) according to the present embodiment is used for bonding the electrode active materials (A) to each other and bonding the electrode active materials (A) to the current collector. The copolymer (P) is preferably a water-soluble polymer compound. The copolymer (P) includes a structural unit (p1) derived from a (meth)acrylic acid salt and a structural unit (p2) derived from a compound represented by general formula (1) described later. The copolymer (P) may be composed of the structural unit (p1) and the structural unit (p2), or may contain other structural units. Other structural units include, but are not limited to, a structural unit (p3) derived from (meth)acrylic acid described later.

The content of the copolymer (P) in the electrode active material layer is preferably 0.15 % by mass or more, more preferably 0.50 % by mass or more, and still more preferably 0.75 % by mass or more. This is to sufficiently develop the above effect by a copolymer (P). The content of the copolymer (P) in the electrode active material layer is preferably 8.5 % by mass or less, more preferably 6.0 % by mass or less, and still more preferably 4.0 % by mass or less. This is because the content of the electrode active material (A) contained in the electrode active material layer is increased to increase the capacity of intercalation and deintercalation of ions into the electrode active material. This is also to suppress an increase in the internal resistance of the battery.

The weight-average molecular weight of the copolymer (P) is preferably 1 million or more, more preferably 1.5 million or more, and still more preferably 2 million or more. The weight-average molecular weight of the copolymer (P) is preferably 5 million or less, more preferably 4 million or less, and still more preferably 3.5 million or less. The weight-average molecular weight is a pullulan-converted value calculated by gel permeation chromatography (GPC), and is a value measured by a method and an apparatus described in Examples to be described later.

The copolymer (P) is preferably substantially uncrosslinked. The term "substantially uncrosslinked" means that a content of a monomer having a crosslinkable reactive functional group in the total monomers, from which the structural units of the copolymer (P) is derived, is 0.5 % by mass or less, preferably 0.1 % by mass or less, and more preferably not contained. The crosslinkable reactive functional group includes, for example, a polymerizable ethylenically unsaturated bond. For example, in the case where the crosslinkable reactive functional group is only a polymerizable ethylenically unsaturated bond, "substantially uncrosslinked" means that the content of a monomer having 2 or more polymerizable ethylenically unsaturated bonds in the total monomers, from which the structural units of the copolymer (P) are derived, is 0.5 % by mass or less, preferably 0.1 % by mass or less, and more preferably not contained. "There is substantially only one polymerizable ethylenically unsaturated bond in the molecule" and "there are substantially no two or more polymerizable ethylenically unsaturated bonds in the molecule." have the same meaning as above.

The structural unit (p1) is preferably a structural unit derived from a metal salt of (meth)acrylic acid, and more preferably a structural unit derived from a alkali metal salt of (meth)acrylic acid. The metal constituting the salt further preferably contains one of or both of sodium and potassium, and particularly preferably contains sodium. The structural unit (p1) may include only a structural unit derived from one type of (meth)acrylic acid salt, and may include structural units derived from a plurality of different types of (meth)acrylic acid salt. Note that even when (meth)acrylic acid is used as a raw material of the copolymer (P), when a salt is formed by a treatment such as neutralization after polymerization, the structural unit, which is derived from (meth)acrylic acid and forms a salt, becomes a structural unit (p1) derived from (meth) acrylic acid salt.

The structural unit (p2) is derived from a compound represented by general formula (1).

[Chemical formula 4]

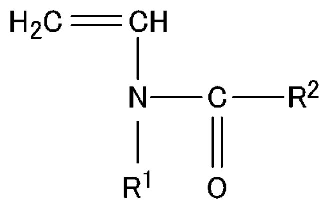

··· (1)

In formula (1), $R^1$ and $R^2$ each independently represent a hydrogen atom or an alkyl group having 1 to 5 carbon atoms. Preferably, $R^1$ and $R^2$ are each independently a hydrogen atom or an alkyl group having 1 to 3 carbon atoms, and more preferably, $R^1$ and $R^2$ are each independently a hydrogen atom or a methyl group.

The combination of $R^1$ and $R^2$ is more preferably $R^1$ : H, $R^2$: H (That is, the structural unit (p2) is a structural unit derived from N-vinylformamide.), or $R^1$ : H, $R^2$ : $CH_3$ (That is,., the structural unit (p2) is a structural unit derived from N-vinylacetamide).

The copolymer (P) may contain a structural unit derived from (meth)acrylic acid (p3).

(Content of Structural Units in Copolymer (P))

The content of the structural unit (p1) is 50 % by mass or more, preferably 65 % by mass or more, and more preferably 70 % by mass or more. This is because it is possible to obtain an electrode active material layer having a high peel strength to the current collector. The content of the structural unit (p1) is 99 % by mass or less, preferably 98 % by mass or less, and more preferably 95 % by mass or less. This is because the dispersibility of the solid components such as the electrode active material and the conductive auxiliary agent in the preparation of the electrode slurry to be described later is further improved.

The content of the structural unit (p2) is 0.50 % by mass or more, preferably 2.0 % by mass or more, and more preferably 3.0 % by mass or more. This is because it is possible to produce an electrode slurry having excellent dispersibility of an electrode active material and a conductive auxiliary agent when producing an electrode slurry to be described later and good coating properties. The content of the structural unit (p2) is 30 % by mass or less, preferably 20 % by mass or less, and more preferably 17 % by mass or less. This is because the occurrence of cracks in the electrodes, which will be described later, is suppressed and the productivity of the electrodes is improved.

The content of the structural unit (p3) is preferably 1.0 % by mass or more, more preferably 5.0 % by mass or more, and still more preferably 10 % by mass or more. The content of the structural unit (p3) is preferably 30.0 % by mass or less, more preferably 25.0 % by mass or less, and still more preferably 20.0 % by mass or less. This is because the generation of precipitates during polymerization can be further suppressed.

(Method for Producing Copolymer (P))

The synthesis of the copolymer (P) is preferably carried out by radical polymerization in an aqueous solvent. As the polymerization method, for example, a method in which all monomers used for polymerization are charged at once and polymerized, a method in which monomers used for polymerization are polymerized while being continuously supplied, or the like can be used. The content of each monomer in the total monomers used for the synthesis of the copolymer (P) is the content of the structural unit corresponding to the monomer in the copolymer (P). For example, the content of the (meth)acrylic acid salt in the total monomer used for the synthesis of the copolymer (P) is the content of the structural unit (p1) in the resulting copolymer (P). The radical polymerization is preferably carried out at a temperature of 30 to 90°C. A specific example of the polymerization method of the copolymer (P) will be described in detail in the following Examples.

Examples of a radical polymerization initiator include, but are not limited to, ammonium persulfate, potassium persulfate, hydrogen peroxide, t-butyl hydroperoxide, azo compounds, and the like. Examples of the azo compound include 2, 2'-azobis (2-methylpropionamidine) dihydrochloride, and the like. When the polymerization is carried out in water, a water-soluble polymerization initiator is preferably used. If necessary, a radical polymerization initiator and a reducing agent may be used in combination for redox polymerization at the time of polymerization. Examples of the reducing agent include sodium bisulfite, longarit, ascorbic acid, and the like.

As the aqueous solvent used for the synthesis of the copolymer (P), water is preferably used, but as long as the polymerization stability of the resulting copolymer (P) is not impaired, a hydrophilic solvent added to water may be used as the aqueous solvent. Examples of the hydrophilic solvent to be added to water include methanol, ethanol, N-methylpyrrolidone, and the like.

[1-2-3. Nonionic Surfactant (B)]

The nonionic surfactant (B) improves the dispersibility of the electrode active material (A) in the electrode slurry, which will be described later, and can disperse more satisfactorily the electrode active material (A) in the electrode manufactured by using the electrode slurry. Further, the nonionic surfactant (B) improves the flexibility of the electrode active material layer, and can suppress the occurrence of cracks even in the electrode active material layer having a large film thickness, that is, a large weight per area.

Examples of the nonionic surfactant (B) include a polyoxyethylene alkyl ether, a sorbitan fatty acid ester, a glycerol fatty acid ester, a polyoxyethylene sorbitan fatty acid ester, a polyoxyethylene sorbitol fatty acid ester, a polyoxyethylene fatty acid ester, a polyoxyethylene hydrogenated castor oil, a polyoxyethylene alkylamine and the like. The nonionic surfactant (B) may contain either one of these compounds alone or a plurality of compounds. Other nonionic surfactants (B) may also be used.

The nonionic surfactant (B) preferably has a segment composed of an ethylene oxide structure, and more preferably a polyoxyethylene alkyl ether.

A HLB (hydrophile-lipophile balance) value of the nonionic surfactant (B) obtained by the glyphin method is preferably 8.0 or more, more preferably 9.5 or more, and still more preferably 10 or more. This is because the peel strength of the electrode active material layer to the current collector is improved, the occurrence of cracks in the electrode active material layer is suppressed, and the cycle characteristics of the nonaqueous secondary battery are improved. The HLB value of the nonionic surfactant (B) obtained by the glyphin method is preferably 19 or less, more preferably 18 or less, and still more preferably 17 or less. This is because the peel strength of the electrode active material layer to the current collector is improved, the occurrence of cracks in the electrode active material layer is suppressed, and the cycle characteristics of the nonaqueous secondary battery are improved.

The glyphin method is a method for obtaining a HLB value by the following calculation formula.

$$\text{HLB value} = 20 \times (\text{Sum of formula weight of hydrophilic part/Molecular weight})$$

The content of the nonionic surfactant (B) with respect to 100 parts by mass of the copolymer (P) is 5.0 parts by mass or more, preferably 10 parts by mass or more, and more preferably 15 parts by mass or more. This is because the peel strength of the electrode active material layer to the current collector is improved, the cycle characteristic of the electrode is improved, and the DCR of the electrode can be lowered.

The content of the nonionic surfactant (B) with respect to 100 parts by mass of the copolymer (P) is 350 parts by mass or less, preferably 200 parts by mass or less, more preferably 100 parts by mass or less, still more preferably 70 parts by mass or less. This is because the peel strength of the electrode active material layer to the current collector and the cycle characteristic of the electrode can be maintained high.

[1-2-4. Cellulose Derivative (C)]

The cellulose derivative (C) improves the dispersibility of the electrode active material (A) in the electrode slurry to be described later, and can disperse the electrode active material (A) more satisfactorily in the electrode active material layer manufactured by using the electrode slurry. Further, the cellulose derivative (C) improves the peel strength of the electrode active material layer to the current collector.

As the cellulose derivative (C), carboxymethyl cellulose or a metal salt thereof, methyl cellulose or a metal salt thereof, hydroxypropyl cellulose or a metal salt thereof, or the like may be used. The cellulose derivative (C) may contain either one of these compounds alone or a plurality of compounds. Other cellulose derivatives (C) can also be used. The cellulose derivative (C) is preferably carboxymethyl cellulose or a metal salt thereof.

The degree of etherification of the cellulose derivative (C) is preferably 0.50 or more, more preferably 0.55 or more, and still more preferably 0.60 or more. This is to improve the dispersibility of the electrode active material (A) in the electrode slurry to be described later. The degree of etherification of the cellulose derivative (C) is preferably 1.8 or less, more preferably 1.4 or less, and still more preferably 1.0 or less. To improve peel strength of an electrode active material layer to a current collector. The degree of etherification is a value obtained from the carbon content obtained by elemental analysis of the cellulose derivative (C).

The content of the cellulose derivative (C) with respect to 100 parts by mass of the copolymer (P) is 10 parts by mass or more, preferably 20 parts by mass or more, and more preferably 30 parts by mass or more. This is because the peel strength of the electrode active material layer to the current collector is improved. The content of the cellulose derivative (C) with respect to 100 parts by mass of the copolymer (P) is 350 parts by mass or less, preferably 180 parts by mass or less, more preferably 100 parts by mass or less, and still more preferably 50 parts by mass or less. This is because the occurrence of cracks in the electrode active material layer can be suppressed.

[1-2-5 Other Components]

The nonaqueous secondary battery electrode may contain a conductive auxiliary agent, carbon black, vapor phase method carbon fiber, or the like, in addition to the above components. As a specific example of the vapor grown carbon fiber, VGCF (registered trademark)-H (Showa Denko K.K.) or the like can be used.

<2. Method of Producing Nonaqueous Secondary Battery Electrode>

Hereinafter, an example of a method of producing a nonaqueous secondary battery electrode will be described, but the method is not limited to the method described herein if the electrode having the above configuration is obtained. In this example, the nonaqueous secondary battery electrode can be produced by applying an electrode slurry on a current collector, drying it to obtain an electrode sheet, and cutting the electrode sheet into an appropriate size and shape as necessary. The electrode slurry contains an electrode active material (A), a copolymer (P), a nonionic surfactant (B), and a cellulose derivative (C). The detailed configuration of the electrode slurry will be described later.

Examples of the method for applying the electrode slurry on the current collector include a reverse roll method, a direct roll method, a doctor blade method, a knife method, an extrusion method, a curtain method, a gravure method, a bar method, a dip method, a squeeze method or the like. Among them, a doctor blade method, a knife method or an extrusion method are preferable, and the applying method using a doctor blade is more preferable. This is because the coating film is suitable for various physical properties such as viscosity and dryness of the electrode slurry, and has a good surface condition.

The electrode slurry may be applied to only one side of the current collector, or may be applied to both sides. When the electrode slurry is applied to both sides of the current collector, the electrode slurry may be applied one by one, or both sides may be applied simultaneously. The electrode slurry may be applied continuously or intermittently to the surface of the current collector. The coating amount and coating range of the slurry can be appropriately determined in accordance with the size of the battery, etc. The weight per area of the electrode active material layer after drying is preferably 4 $mg/cm^2$ to 20 $mg/cm^2$, more preferably 6 $mg/cm^2$ to 16 $mg/cm^2$.

The method of drying the applied electrode slurry is not particularly limited, but for example, hot air, vacuum, (far) infrared, electron beam, microwave, and cold air may be used alone or in combination. The drying temperature is preferably from 40°C to 180°C, and the drying time is preferably from 1 minute to 30 minutes.

The electrode sheet having the electrode active material layer formed on the surface of the current collector may be cut to a suitable size and shape as an electrode. The cutting method of the electrode sheet is not particularly limited, but slits, lasers, wire cuts, cutters, Thomson, or the like can be used.

The electrode sheet may be pressed as needed before or after cutting. Thus, the electrode active material is firmly bound by the current collector, and the battery can be made compact by thinning the electrode. As the pressing method, a general method can be used, and in particular, a die pressing method and a roll pressing method are preferably used. The press pressure is not particularly limited, but is preferably 0.5 to 5 $t/cm^2$. This is to suppress the influence on insertion and desorption of lithium ions or the like into the electrode active material (A).

<3. Electrode Binder Composition>

The electrode binder composition of the present embodiment includes a copolymer (P), a nonionic surfactant (B), a cellulose derivative (C), and an aqueous solvent. The electrode binder composition is preferably a solution. The aqueous solvent is water, a hydrophilic solvent, or a mixture thereof.

The aqueous solvent contained in the electrode binder composition may be the same as the aqueous solvent used for the synthesis of the copolymer (P). As the aqueous solvent contained in the electrode binder composition, an aqueous solvent used for the synthesis of the copolymer (P) may be used as it is, an aqueous solvent may be added in addition to the aqueous solvent used for the synthesis, or the aqueous solvent may be replaced with a new aqueous solvent after the synthesis of the copolymer (P). Here, the aqueous solvent to be added or substituted may have the same or different composition as the solvent used for the synthesis of the copolymer (P).

The content of the nonionic surfactant (B) and the cellulose derivative (C) with respect to 100 parts by mass of the copolymer (P) are as described above.

The concentration of the nonvolatile component in the electrode binder composition is preferably 30 % by mass or less, more preferably 20 % by mass or less, and still more preferably 10 % by mass or less. To suppress the viscosity increase of an electrode binder composition and to facilitate mixing with an electrode active material (A) when an electrode is produced. The concentration of the nonvolatile component in the electrode binder composition is preferably 0.30 % by mass or more, more preferably 1.0 % by mass or more, and still more preferably 2.0 % by mass or more. This it to disperse an electrode active material (A) well when producing an electrode slurry, and to improve the peel strength of the electrode active material layer to a current collector in the produced electrode.

<4. Electrode Slurry>

The electrode slurry of the present embodiment includes an electrode active material (A), a copolymer (P), a nonionic surfactant (B), a cellulose derivative (C), and an aqueous medium. The slurry of the present embodiment may contain other components such as a conductive auxiliary, carbon black, vapor grown carbon fiber, and the like, as required.
In the electrode slurry, the copolymer (P), the nonionic surfactant (B), and the cellulose derivative (C) are preferably dissolved in an aqueous medium. This is because a uniform layer containing a copolymer (P), a nonionic surfactant (B), and a cellulose derivative (C) can be easily formed on the particle surface of the electrode active material after drying the slurry.
The aqueous medium contained in the electrode slurry is water, a hydrophilic solvent, or a mixture thereof. The aqueous medium may be the same as the aqueous solvent used for the synthesis of the copolymer (P). As the aqueous medium, an aqueous solvent used for the synthesis of the copolymer (P) may be used as it is, an aqueous solvent may be added in addition to the aqueous solvent used for the synthesis, or the aqueous solvent may be replaced with a new aqueous solvent after the synthesis of the copolymer (P). Here, the aqueous solvent to be added or substituted may have the same or different composition as the solvent used for the synthesis of the copolymer (P).
The nonvolatile component concentration in the electrode slurry is preferably 20 % by mass or more, more preferably 30 % by mass or more, and still more preferably 40 % by mass or more. This is to form more electrode active material layers with a small amount of electrode slurry. The nonvolatile component concentration in the electrode slurry is preferably 80 % by mass or less, more preferably 70 % by mass or less, and still more preferably 60 % by mass or less. This is because the electrode slurry can be easily prepared.
The content of the electrode active material (A) and the content of the copolymer (P) in the nonvolatile component of the electrode slurry are the same as the content of the electrode active material (A) and the content of the copolymer (P) in the electrode active material layer, respectively, as described above in the description of the nonaqueous secondary battery electrode. The quantitative relationship of the copolymer (P), the nonionic surfactant (B), and the cellulose derivative (C) in the electrode slurry is the same as the quantitative relationship of these components in the electrode active material layer, as described above in the description of the nonaqueous secondary battery electrode.

<5. Method of producing Electrode Slurry>

Examples of the method for producing the electrode slurry include, but are not limited to, (a) a method for mixing the electrode binder composition, the electrode active material, other components as needed, and an aqueous solvent as needed; and (b) a method for adding each component contained in the electrode slurry. The mixing method is not particularly limited, but for example, a method of mixing the necessary components by using a mixing device such as a stirring type, a rotating type, or a shaking type. The addition order of the components to be mixed is not particularly limited.

<6. Nonaqueous Secondary Batteries>

As a preferred example of the nonaqueous secondary battery according to the present embodiment, a lithium-ion secondary battery will be described, but the configuration of the battery is not limited to that described herein. In the lithium ion secondary battery according to the example described herein, a positive electrode, a negative electrode, an electrolytic solution, and a parts such as a separator as necessary are housed in an outer package, and an nonaqueous secondary battery electrode produced by the above method can be used for one or both of the positive electrode and the negative electrode.

[6-1. Electrolyte Solution]

A nonaqueous liquid having ionic conductivity is used as the electrolyte solution. Examples of the electrolyte solution include a solution in which an electrolyte is dissolved in an organic solvent, an ionic liquid, and the like, but the former is preferable. This is because a nonaqueous secondary battery having low manufacturing cost and low internal resistance can be obtained.
As the electrolyte, an alkali metal salt can be used, and it can be appropriately selected according to the kind of the electrode active material or the like. Examples of the electrolyte include $LiClO_4$, $LiBF_6$, $LiPF_6$, $LiCF_3SO_3$, $LiCF_3CO_2$, $LiAsF_6$, $LiSbF_6$, $LiB_{10}Cl_{10}$, $LiAlCl_4$, LiCl, LiBr, $LiB(C_2H_5)_4$, $CF_3SO_3Li$, $CH_3SO_3Li$, $LiCF_3SO_3$, $LiC_4F_9SO_3$, $Li(CF_3SO_2)_2N$, lithium aliphatic carboxylates and the like. Other alkali metal salts may also be used as the electrolyte.
As the organic solvent for dissolving the electrolyte, it is not particularly limited, but a carbonate compound such as ethylene carbonate (EC), propylene carbonate (PC), diethyl carbonate (DEC), methylethyl carbonate (MEC), dimethyl carbonate (DMC), fluoroethylene carbonate (FEC), vinylene carbonate (VC); nitrile compounds such as acetonitrile; carboxylate esters such as ethyl acetate, propyl acetate, methyl propionate, ethyl propionate and propyl propionate; or the like may be used. These organic solvents may be used alone or in combination of two or more.

[6-2. Outer Package]

For example, a laminate material of an aluminum foil and a resin film can be suitably used as the outer package, but the present invention is not limited thereto. The shape of the battery may be any of a coin type, a button type, a seat type, a cylindrical type, a square type, a flat type, or the like.

EXAMPLE

In the following examples, negative electrodes of a lithium ion secondary battery, electrode slurries, and lithium ion secondary batteries are prepared as an example of the constitution of the present invention, and the present invention is explained in more detail and the effect of the present invention is confirmed in comparison with negative electrodes of a lithium ion secondary batteries, an electrode slurries, and lithium ion secondary batteries of comparative examples. The present invention is not limited thereto.

<1. Synthesis of Copolymer (P)>

Copolymers (P1) to (P4) were synthesized using the following monomers and polymerization initiators.

(Meth)acrylic acid salt (monomer corresponding to structural unit (p1)): 28.5 % by mass sodium acrylate aqueous solution
A compound represented by the general formula (1) (monomer corresponding to structural unit (p2)): N-vinylacetamide (manufactured by Showa Denko K.K.)
(Meth)acrylic acid (monomer corresponding to structural unit (p3)): 80 % by mass acrylic acid aqueous solution (manufactured by Mitsubishi Chemical Corporation)
Polymerization initiator: 2,2'-azobis(2-methylpropionamidine) dihydrochloride (manufactured by Wako Pure Chemical Industries, Ltd.; V-50) and ammonium persulfate (manufactured by Wako Pure Chemical Industries, Ltd.)

The methods for producing the copolymers (P1) to (P4) are similar. A separable flask equipped with a cooling tube, thermometer, stirrer and dropping funnel was charged with 100 parts by mass of total of the corresponding monomers which composition is shown in Table 1, 0.2 parts by mass of V-50, 0.05 parts by mass of ammonium persulfate and 693 parts by mass of water at 30°C. The composition was heated to 80°C and polymerized for 4 hours. Thereafter, the mixture was cooled to room temperature, dried and ground to obtain powdery copolymers (P1) to (P4), respectively.

[Table 1]

| | | Copolymer (P) | | | |
|---|---|---|---|---|---|
| | | P1 | P2 | P3 | P4 |
| Content of each structural unit in copolymer (P) (% by mass) | Structural unit (p1): Sodium acrylate | 90.0 | 99.0 | 85.0 | 75.0 |
| | Structural unit (p2): N-vinylacetamide | 10.0 | 1.0 | 15.0 | 10.0 |
| | Structural unit (p3): Acrylic acid | | | | 15.0 |
| Evaluation | Weight-average molecular weight (million) | 2.8 | 3.3 | 2.65 | 2.0 |

<2. Weight-average molecular Weight of the Copolymers (P)>

The weight-average molecular weights of the copolymers (P1) to (P4) were determined using gel permeation chromatography (GPC) under the following conditions.

GPC Device: GPC-101 (manufactured by Showa Denko K.K.))
Solvent: 0.1 M aqueous $NaNO_3$
Sample column: Shodex Column Ohpak SB-806 HQ (8.0 mm I.D. × 300 mm) × 2

Reference Column: Shodex Column Ohpak SB-800 RL (8.0 mm I.D. × 300 mm) × 2
Column temperature: 40°C
Sample concentration: 0.1 % by mass
Detector: RI-71S (manufactured by Shimadzu Corporation)
Pump: DU-H2000 (manufactured by Shimadzu Corporation)
Pressure: 1.3 MPa
Flow rate: 1 ml/min
Molecular weight standard: Pullulan (P-5, P-10, P-20, P-50, P-100, P-200, P-400, P-800, P-1300, and P-2500 (manufactured by Showa Denko K.K.))

<3. Preparation of Negative Electrode Slurry>

In each of the Examples and the Comparative Examples, the amount of the nonvolatile component shown in Tables 2 and 3 and the ion exchange water of the first addition amount were mixed. Mixing was carried out using a stirring mixer (rotary revolution stirring mixer) at 2000 rpm for 4 minutes. To the resulting mixture was further added the second addition amount of ion-exchanged water in Tables 2 and 3, and was further mixed at 2000 rpm/min for 4 minutes in the above mixing apparatus to prepare negative electrode slurries (Q1) to (Q13) and (CQ1) to (CQ5).

[Table 2]

| | Addition amount with respect to 100 parts by mass of copolymer (P) (part by mass) | | | Example 1 | Example 2 | Example 3 | Example 4 | Example 5 | Example 6 | Example 7 | Example 8 | Example 9 |
|---|---|---|---|---|---|---|---|---|---|---|---|---|
| Non-volatile component | Negative electrode active material (A) | Graphite * 1 | | 2510 | 2510 | 2510 | 2510 | 3067 | 7808 | 7530 | 2510 | 2510 |
| | | Silicon oxide (SiO) *2 | | 640 | 640 | 640 | 640 | 782 | 1991 | 1920 | 640 | 640 |
| | conductiv e auxiliary | VGCF-H *3 | | 33.3 | 33.3 | 33.3 | 33.3 | 40.7 | 103.7 | 100.0 | 33.3 | 33.3 |
| | Copolymer (P) | | P1 | 100 | | | | 100 | 100 | 100 | 100 | 100 |
| | | | P2 | | 100 | | | | | | | |
| | | | P3 | | | 100 | | | | | | |
| | | | P4 | | | | 100 | | | | | |
| | Nonionic surfactant (B) | Polyoxyethylene alkyl ether | Eg 1108 *4 (HLB=13.4) | 16.7 | 16.7 | 16.7 | 16.7 | 50.0 | 333 | 16.7 | 16.7 | 16.7 |
| | Cellulose derivative (C) | Carboxymethyl cellulose | CMC Daicel 1110 *7 (Etherificatio n degree 0.7) | 33.3 | 33.3 | 33.3 | 33.3 | 33.3 | 33.3 | 333 | | |
| | | | CMC Daicel 1190 *7 (Etherificatio n degree 0.7) | | | | | | | | 33.3 | |
| | | | CMC Daicel 1350 *7 (Etherificatio n degree 1.3) | | | | | | | | | 33.3 |

(continued)

| | | | | | | | | | | | |
|---|---|---|---|---|---|---|---|---|---|---|---|
| Water (ion-exchanged water) | | First addition amount | 1567 | 1567 | 1567 | 1567 | 1914 | 4873 | 4700 | 1567 | 1567 |
| | | Second addition amount | 1767 | 1767 | 1767 | 1767 | 2159 | 5496 | 5300 | 1767 | 1767 |
| Content of the negative active material (A) in the non-volatile component of the negative electrode slurry (% by mass) | | | 94.5 | 94.5 | 94.5 | 94.5 | 94.5 | 94.5 | 94.5 | 94.5 | 94.5 |
| Slurry for negative electrode | | | Q1 | Q2 | Q3 | Q4 | Q5 | Q6 | Q7 | Q8 | Q9 |
| Evaluation | Slurry for negative electrode | Appearance of slurry for negative electrode | Good | Good | Good | Good | Good | Good | Good | Good | Good |
| | | Non-volatile component concentration (% mass) | 50 | 50 | 50 | 50 | 50 | 50 | 50 | 50 | 50 |
| | Negative electrode | Number of cracks in the negative electrode active material layer | 0 | 0 | 0 | 0 | 0 | 0 | 2 | 0 | 0 |
| | | Peel strength of the negative electrode active material layer (mN/mm) | 59 | 56 | 61 | 60 | 57 | 50 | 70 | 55 | 54 |
| | Lithium ion secondar y battery | 100 cycle discharge capacity retention rate (%) | 91 | 93 | 89 | 87 | 90 | 88 | 90 | 87 | 87 |
| | | Internal Resistance (DCR (Ω)) | 15 | 16 | 14 | 15 | 13 | 11 | 19 | 15 | 15 |

[Table 3]

| | Addition amount with respect to 100 parts by mass of copolymer (P) (part by mass) | | | Example 10 | Example 11 | Example 12 | Example 13 | Comparative Example 1 | Comparative Example 2 | Comparative Example 3 | Comparative Example 4 | Comparative Example 5 |
|---|---|---|---|---|---|---|---|---|---|---|---|---|
| Non-volatile component | Negative electrode active material (A) | Graphite * 1 | | 2510 | 2510 | 2510 | 2510 | 2231 | 2510 | 2510 | 1953 | 1673 |
| | | Silicon oxide (SiO) *2 | | 640 | 640 | 640 | 640 | 569 | 640 | 640 | 498 | 427 |
| | conductive auxiliary | VGCF-H *3 | | 33.3 | 33.3 | 33.3 | 33.3 | 29.6 | 33.3 | 33.3 | 25.9 | 22.2 |
| | Copolymer (P) | | P1 | 100 | 100 | 100 | 100 | 100 | 100 | 100 | 100 | 100 |
| | Nonionic surfactant (B) | Polyoxyethylene alkyl ether | Eg 1108 *4 (HLB=13.4) | | | | | | | | 16.7 | |
| | | | Eg 1118S-70 *4 (HLB=16.4) | 16.7 | | | | | | | | |
| | | | Eg 1150S-60 *4 (HLB=18.6) | | | | 16.7 | | | | | |
| | | | Eg 103 *4 (HLB=8.1) | | | 16.7 | | | | | | |
| | | | Eg 705 *4 (HLB=10.5) | | 16.7 | | | | | | | |
| | Anionic surfactant | Polyoxyethylene alkyl ether sulfate | Hi Tenor 08E *5 | | | | | | 16.7 | | | |
| | Cationic surfactant | Quaternary ammonium salt or dimethylamino propylamide stearate | Cationogen TML *6 | | | | | | | 16.7 | | |
| | Cellulose derivative (C) | Carboxymethyl cellulose | CMC Daicel 1110 *7 (Etherification degree 0.7) | 33.3 | 33.3 | 33.3 | 33.3 | 33.3 | 33.3 | 33.3 | | |

(continued)

| | | | Example 10 | Example 11 | Example 12 | Example 13 | Comparative Example 1 | Comparative Example 2 | Comparative Example 3 | Comparative Example 4 | Comparative Example 5 |
|---|---|---|---|---|---|---|---|---|---|---|---|
| | Addition amount with respect to 100 parts by mass of copolymer (P) (part by mass) | | | | | | | | | | |
| Water (ion-exchanged water) | | First addition amount | 1567 | 1567 | 1567 | 1567 | 1392 | 1567 | 1567 | 1219 | 1044 |
| | | Second addition amount | 1767 | 1767 | 1767 | 1767 | 1570 | 1767 | 1767 | 1374 | 1178 |
| Content of the negative active material (A) in the non-volatile component of the negative electrode slurry (% mass) | | | 94.5 | 94.5 | 94.5 | 94.5 | 94.5 | 94.5 | 94.5 | 94.5 | 94.5 |
| Slurry for negative electrode | | | Q10 | Q11 | Q12 | Q13 | CQ1 | CQ2 | CQ3 | CQ4 | CQ5 |
| Evaluation | Slurry for negative electrode | Appearance of slurry for negative electrode | Good | Good | Good | Good | Bad | Bad | Bad | Good | Good |
| | | Non-volatile component concentration (% mass) | 50 | 50 | 50 | 50 | 50 | 50 | 50 | 50 | 50 |
| | Negative electrode | Number of cracks in the negative electrode active material layer | 0 | 0 | 2 | 1 | 8 | 8 | 9 | 0 | 6 |
| | | Peel strength of the negative electrode active material layer (mN/mm) | 58 | 57 | 50 | 52 | 63 | 10 | 3 | 45 | 60 |
| | Lithium ion secondary battery | 100 cycle discharge capacity retention rate (%) | 90 | 90 | 86 | 87 | 86 | - | - | 80 | 85 |
| | | Internal Resistance (DCR (Ω)) | 15 | 15 | 16 | 15 | 29 | - | - | 22 | 27 |

In Tables 2 and 3:

*1: Graphite: SCMG (registered trademark)-XRs manufactured by Showa Denko K.K.
*2: Silicon oxide: manufactured by Sigma-Aldrich
*3: VGCF (registered trademark)-H: manufactured by Showa Denko K.K.
*4: Polyoxyethylene alkyl ether: all manufactured by Kao Corporation
*5: Hightenol (registered trademark) 08E: manufactured by Daiichi Kogyo Seiyaku Co., Ltd.
*6: Cathogen TML (registered trademark): manufactured by Daiichi Kogyo Seiyaku Co., Ltd.
*7: CMC Daicel 1110: manufactured by Daicel Co., Ltd., etherification degree 0.7, 2% viscosity 100 to 200 (mPa · s)
CMC Daicel 1190: manufactured by Daicel Co., Ltd., etherification degree 0.7, 1% viscosity 1300 to 2000 (mPa · s)
CMC Daicel 1350: manufactured by Daicel Co., Ltd., etherification degree 1.3, 1% viscosity 200 to 300 (mPa · s)

<4. Appearance Evaluation of Negative Electrode Slurry>

The negative electrode slurries (Q1) to (Q 13) and (CQ1) to (CQ5) were confirmed by visual observation, and the sizes of aggregates were measured with a micrometer. In 10 g of the negative electrode slurry, the presence of aggregates having a maximum dimension of 1 mm or more was defined as bad, and the absence of aggregates was defined as good.

<5. Battery Fabrication>

[5-1. Preparation of Negative Electrode]

The prepared negative electrode slurry was applied to one side of a 10 μm thick copper foil (current collector) using a doctor blade so that the weight per area after drying was 8mg/cm$^2$. The copper foil coated with the negative electrode slurry was dried at 60°C for 10 minutes and then at 100°C for 5 minutes to prepare a negative electrode sheet having a negative electrode active material layer formed thereon. The negative electrode sheet was pressed at a press pressure of 1t/cm$^2$ using a die press. The pressed negative electrode sheet was cut out to 22 mm × 22 mm, and a negative electrode was prepared by attaching a conductive tab.

[5-2. Preparation of Positive Electrode]

A positive electrode slurry was prepared by mixing 90 parts by mass of $LiNi_{1/3}Mn_{1/3}Co_{1/3}O_2$, 5 parts by mass of acetylene black, and 5 parts by mass of polyvinylidene fluoride; and then mixing 100 parts by mass of N-methylpyrrolidone (The ratio of $LiNi_{1/3}Mn_{1/3}Co_{1/3}O_2$ in the solid content was 0.90.).

The prepared positive electrode slurry was applied to one side of a 20 μm thick aluminum foil (current collector) using a doctor blade so that the weight per area after drying was 22.5 mg/cm$^2$. The aluminum foil coated with the positive electrode slurry was dried at 120°C for 5 minutes and then pressed by a roll press to prepare a positive electrode sheet having a positive electrode active material layer having a thickness of 100 μm. The obtained positive electrode sheet was cut out to 20 mm × 20 mm, and a positive electrode was prepared by attaching a conductive tab.

[5-3. Preparation of Electrolyte Solution]

Ethylene carbonate (EC), ethyl methyl carbonate (EMC) and fluoroethylene carbonate (FEC) were mixed at a volume ratio of 30: 60: 10 to prepare a mixed solvent. $LiPF_6$ was dissolved in the mixed solvent so as to have a concentration of 1.0 mol/L, and vinylene carbonate (VC) was dissolved in the mixed solvent so as to have a concentration of 1.0 % by mass, thereby preparing an electrolyte solution.

[5-4. Battery Assembly]

The positive electrode and the negative electrode were arranged so that the positive electrode active material layer and the negative electrode active material layer face each other via a separator made of a polyolefin porous film, and the positive electrode and the negative electrode are housed in a laminate outer package (battery pack) of an aluminum foil and a resin film. The lithium ion secondary battery was obtained by injecting an electrolyte solution into the outer package and packing it with a vacuum heat sealer.

<6. Negative Electrode Evaluation>

The electrode performance and the battery performance produced in each Example and Comparative Example were evaluated. The evaluation methods are as follows and the results are shown in Tables 2 and 3.

[6-1. Number of Cracks in the Negative Electrode Active Material Layer]

The surface of the negative electrode sheet after the pressing process was confirmed by visual observation to have an appearance, and the number of cracks in a rectangular area of 5 cm × 20 cm was counted.

(6-2. Peel strength of Negative Electrode Active Material Layer)

Using the negative electrode sheet after the press process, the peel strength of the negative electrode active material layer was measured in an atmosphere of 23°C and 50 % by mass relative humidity in all the processes. Tensilone (registered trademark, manufactured by A & D Co., Ltd.) was used as a testing machine. The negative electrode sheet was cut out with a width of 25 mm and a length of 70 mm, and used as a test piece. The negative electrode active material layer on the test piece and a SUS plate having a width of 50 mm and a length of 200 mm were bonded together using a double-sided tape (NITTOTAPE (registered trademark) No 5, manufactured by Nitto Denko Corporation) so that the center of the test piece coincided with the center of the SUS plate. The double-sided tape was adhered to cover the entire range of the test piece.

After placing the test piece and the SUS plate stuck together for 10 minutes, the copper foil was peeled from one end of the negative electrode active material by 20 mm in the length direction, folded back by 180°, and the peeled part of the copper foil was grasped by the chuck on the upper side of the testing machine. Further, one end of the SUS plate from which the copper foil was removed was grasped by the lower chuck. In this state, the copper foil was peeled from the test piece at a speed of 100 ± 10 mm/min, and a graph of peeling length (mm) - peeling force (mN) was obtained. In the obtained graph, the average value of the peeling force at the peeling length of 10 to 45 mm (mN) was calculated, and the value obtained by dividing the average value of the peeling force by the width of the test piece of 25 mm was defined as the peel strength of the negative electrode active material layer (mN/mm). In any one of the Examples and the Comparative Examples, peeling between the double-sided tape and the SUS plate, and interfacial peeling between the double-sided tape and the negative electrode active material layer did not occur during the test.

<7. Battery Evaluation>

[7-1. Discharge capacity retention rate (cycle characteristic)]

The charge-discharge cycle test of the battery was carried out under the condition of 25°C according to the following procedure. First, the battery was charged until the voltage reached 4.2 V with a current of 1 C (CC charge), and then it was charged until the current reached 1/20 C with a voltage of 4.2 V (CV charging). After standing for 30 minutes, the battery was discharged until the voltage reached 2.75 V with a current of 1 C (CC discharge). The sequence of operations of CC charging, CV charging, and CC discharging referred to one cycle. The sum of the time integral values of the current in the n-th cycle CC charging and the CV charging is defined as the charging capacity of the n-th cycle (mAh), and the time integral value of the current in the n-th cycle CC discharging is defined as the discharging capacity of the n-th cycle (mAh). The discharge capacity retention rate of the n-th cycle of the battery is a ratio (%) of the discharge capacity of the n-th cycle to that of the first cycle. In this examples and the comparative examples, the discharge capacity retention rate at the 100 cycle (also called "100 cycle discharge capacity retention rate") was evaluated.

[7-2. Internal Resistance (DCR)]

The internal resistance (DCR (Ω)) of the battery was measured under the condition of 25°C by the following procedure. From the rest potential to 3.6 V, a constant current of 0.2 C was charged, and the state of charge was set to 50% (SOC 50%) of the initial capacity. Thereafter, discharge was performed at the current values of 0.2 C, 0.5 C, 1 C, and 2 C for 60 seconds. From the relationship between these 4 current values (value per second) and voltage, DCR (Ω) at SOC 50% was determined.

<8. Evaluation Results>

Table 4 compares the number of cracks on the electrode surface with the presence or absence of the nonionic surfactant (B) and the presence or absence of the cellulose derivative (C) in the electrode active material layer. As can

be seen from this table, in order to suppress the occurrence of cracks on the electrode surface, it is essential to include the nonionic surfactant (B) in the electrode active material layer in order to effectively suppress the occurrence of cracks on the electrode surface.

[Table 4]

| Number of cracks on the electrode surface | | Cellulose derivative (C) | |
|---|---|---|---|
| | | Presence | Absence |
| Nonionic surfactant (B) | Presence | Example 1 0 | Comparative Example 4 0 |
| | Absence | Comparative Example 1 8 | Comparative Example 5 6 |

Table 5 compares the values of the DCR of the battery with respect to the presence or absence of the nonionic surfactant (B) and the presence or absence of the cellulose derivative (C) in the electrode active material layer.

[Table 5]

| DCR of the battery | | Cellulose derivative (C) | |
|---|---|---|---|
| | | Presence | Absence |
| Nonionic surfactant (B) | Presence | Example 1 15Ω | Comparative Example 4 22Ω |
| | Absence | Comparative Example 1 29Ω | Comparative Example 5 27Ω |

Comparing Example 1 with Comparative Example 1 and Comparative Example 4 with Comparative Example 5, it can be seen that the addition of the nonionic surfactant (B), regardless of the presence or absence of the cellulose derivative (C), has an effect of reducing the DCR.
In comparison between Comparative Example 1 and Comparative Example 5, the DCR is increased by 2 Ω when the electrode active material layer contains the cellulose derivative (C) in the absence of the nonionic surfactant (B). In comparison with Example 1 and Comparative Example 4, when the nonionic surfactant (B) is included, the DCR is lowered by 7 S2 by including the cellulose derivative (C).
This shows that the effect of the cellulose derivative (C) on the DCR of the battery is reversed depending on whether or not the electrode active material layer contains the nonionic surfactant (B). That is, when the nonionic surfactant (B) is included in the electrode active material layer, it cannot be easily predicted that the DCR of the battery is greatly reduced by the addition of the cellulose derivative (C).
Table 6 compares the peel strength of the electrode active material layer with respect to the presence or absence of the nonionic surfactant (B) and the presence or absence of the cellulose derivative (C) in the electrode active material layer.

[Table 6]

| Peel strength of the electrode active material layer | | Cellulose derivative (C) | |
|---|---|---|---|
| | | Presence | Absence |
| Nonionic surfactant (B) | Presence | Example 1 59mN/mm | Comparative Example 4 45mN/mm |
| | Absence | Comparative Example 1 63mN/mm | Comparative Example 5 60mN/mm |

When the cellulose derivative (C) is added, the peel strength of the electrode active material layer is improved regardless of the presence or absence of the nonionic surfactant (B). However, it can be seen that the effect of improving the peel strength of the electrode active material layer by the cellulose derivative (C) is greater when the nonionic surfactant (B) is contained (The effect of Example 1 on Comparative Example 4 (14 mN/mm improvement) is greater than the effect of Comparative Example 1 on Comparative Example 5 (3 mN/mm improvement).).
From this, it can be seen that when the nonionic surfactant (B) is included in the electrode active material layer, the effect of improving the peel strength of the electrode active material layer by the cellulose derivative (C) is dramatically increased as compared with the case where the nonionic surfactant (B) is not included.
Table 7 compares the values of the cycle capacity retention rate of the battery with respect to the presence or

absence of the nonionic surfactant (B) and the presence or absence of the cellulose derivative (C) in the electrode active material layer.

[Table 7]

| Cycle capacity retention rate of the cell | | Cellulose derivative (C) | |
|---|---|---|---|
| | | Presence | Absence |
| Nonionic surfactant (B) | Presence | Example 1 91% | Comparative Example 4 80% |
| | Absence | Comparative Example 1 86% | Comparative Example 5 85% |

When the cellulose derivative (C) is added, the cycle capacity retention rate of the battery is improved regardless of the presence or absence of the nonionic surfactant (B). However, it can be seen that the effect of the cellulose derivative (C) in improving the cycle capacity retention rate of the battery is greater when the nonionic surfactant (B) is contained (The effect of Example 1 on Comparative Example 4 (11% improvement) is greater than the effect of Comparative Example 1 on Comparative Example 5 (1% improvement).).

From this, it can be seen that when the nonionic surfactant (B) is included in the electrode active material layer, the effect of the cellulose derivative (C) in improving the cycle capacity retention rate of the battery is dramatically increased as compared with the case where the nonionic surfactant (B) is not included.

The effect of nonionic surfactant (B) is considered. When the cycle capacity retention rate of the battery is compared in the case where the cellulose derivative (C) is not contained, the cycle capacity retention rate is lower in the comparative example 4 containing the nonionic surfactant (B) than in the comparative example 5 not containing the nonionic surfactant (B). On the other hand, in the case of including the cellulose derivative (C), when the cycle capacity retention rate of the battery is compared, the cycle capacity retention rate is improved in Example 1 including the nonionic surfactant (B) compared with Comparative Example 1 not including the nonionic surfactant (B).

That is, when the cellulose derivative (C) is contained or not contained, the nonionic surfactant (B) exhibits the completely opposite effect. That is, if the electrode active material layer contains the cellulose derivative (C), it is not easily predicted that the cycle capacity retention rate of the battery is improved by the addition of the nonionic surfactant (B).

As described above, according to a nonaqueous secondary battery electrode including an electrode active material (A), a copolymer (P), a nonionic surfactant (B), and a cellulose derivative (C) in an electrode active material layer, it is possible to obtain a battery which has an electrode active material layer having a small crack, a high peel strength to a current collector; and which has a low internal resistance, and a high cycle capacity retention rate.

From Examples 1, 5, and 6, it can be said that the object of the present invention can be achieved if the content of the nonionic surfactant (B) with respect to 100 parts by mass of the copolymer (P) is 5.0 to 350 parts by mass, and further from Examples 1 and 7, the content of the cellulose derivative (C) with respect to 100 parts by mass of the copolymer (P) is 10 to 350 parts by mass.

## Claims

**1.** A nonaqueous secondary battery electrode comprising

a current collector and
an electrode active material layer formed on a surface of the current collector,
wherein the electrode active material layer comprises an electrode active material (A), a copolymer (P), a nonionic surfactant (B), and a cellulose derivative (C);
the copolymer (P) comprises a structural unit (p1) derived from a (meth)acrylic acid salt and a structural unit (p2) derived from a compound represented by general formula (1);
in the copolymer (P), a content of the structural unit (p1) is 50 % by mass or more and 99 % by mass or less;
in the copolymer (P), a content of the structural unit (p2) is 0.50 % by mass or more and 30 % by mass or less;
a content of the nonionic surfactant (B) with respect to 100 parts by mass of the copolymer (P) is 5.0 parts by mass or more and 350 parts by mass or less; and
a content of the cellulose derivative (C) with respect to 100 parts by mass of the copolymer (P) is 10 parts by mass or more and 350 parts by mass or less,

[Chemical formula 1]

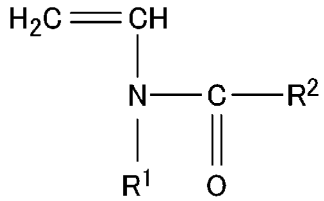

··· (1)

wherein in the formula, $R^1$ and $R^2$ each independently represent a hydrogen atom or an alkyl group having 1 to 5 carbon atoms.

2. The nonaqueous secondary battery electrode according to claim 1, wherein the copolymer (P) is a water-soluble polymer compound.

3. The nonaqueous secondary battery electrode according to claim 1 or 2, wherein a content of the electrode active material (A) in the electrode active material layer is 90 % by mass or more and 99 % by mass or less.

4. The nonaqueous secondary battery electrode according to any one of claims 1 to 3, wherein the electrode active material (A) comprises silicon.

5. The nonaqueous secondary battery electrode according to any one of claims 1 to 4, wherein a content of the copolymer (P) in the electrode active material layer is 0.15 % by mass or more and 8.5 % by mass or less.

6. The nonaqueous secondary battery electrode according to any one of claims 1 to 5, wherein the nonionic surfactant (B) has a segment composed of an ethylene oxide structure.

7. The nonaqueous secondary battery electrode according to any one of claims 1 to 6, wherein a HLB value of the nonionic surfactant (B) obtained by the glyphin method is 8.0 or more and 19 or less.

8. The nonaqueous secondary battery electrode according to any one of claims 1 to 7, wherein the cellulose derivative (C) is carboxymethyl cellulose or a metal salt thereof.

9. The nonaqueous secondary battery electrode according to claim 8, wherein a degree of etherification of the carboxymethyl cellulose or its metal salt is 0.5 or more and 1.8 or less.

10. The nonaqueous secondary battery electrode according to any one of claims 1 to 9, wherein a weight-average molecular weight of the copolymer (P) is in the range of 1.0 million to 5.0 million, determined as described in the description.

11. The nonaqueous secondary battery electrode according to any one of claims 1 to 10, wherein the copolymer (P) further comprises a structural unit (p3) derived from (meth)acrylic acid, and
a content of the structural unit (p3) in the copolymer (P) is 1.0 % by mass or more and 30 % by mass or less.

12. A nonaqueous secondary battery comprising the nonaqueous secondary battery electrode according to any one of claims 1 to 11 as a negative electrode.

13. The nonaqueous secondary battery according to claim 12, wherein the nonaqueous secondary battery is a lithium ion secondary battery.

14. An electrode binder composition comprising a copolymer (P), a nonionic surfactant (B), a cellulose derivative (C), and an aqueous solvent,

wherein the copolymer (P) comprises a structural unit (p1) derived from a (meth)acrylic acid salt and a structural unit (p2) derived from a compound represented by general formula (1);
in the copolymer (P), a content of the structural unit (p1) is 50 % by mass or more and 99 % by mass or less;
in the copolymer (P), a content of the structural unit (p2) is 0.50 % by mass or more and 30 % by mass or less;

a content of the nonionic surfactant (B) with respect to 100 parts by mass of the copolymer (P) is 5.0 parts by mass or more and 350 parts by mass or less; and
a content of the cellulose derivative (C) with respect to 100 parts by mass of the copolymer (P) is 10 parts by mass or more and 350 parts by mass or less,

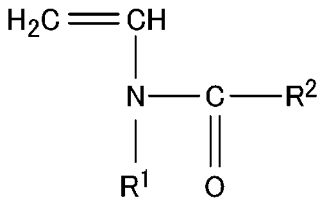

··· (1)

wherein in the formula, $R^1$ and $R^2$ each independently represent a hydrogen atom or an alkyl group having 1 to 5 carbon atoms.

**15.** An electrode slurry comprising an electrode active material (A), a copolymer (P), a nonionic surfactant (B), a cellulose derivative (C), and an aqueous medium,

wherein the copolymer (P) comprises a structural unit (p1) derived from a (meth)acrylic acid salt and a structural unit (p2) derived from a compound represented by general formula (1);
in the copolymer (P), a content of the structural unit (p1) is 50 % by mass or more and 99 % by mass or less;
in the copolymer (P), a content of the structural unit (p2) is 0.50 % by mass or more and 30 % by mass or less;
a content of the nonionic surfactant (B) with respect to 100 parts by mass of the copolymer (P) is 5.0 parts by mass or more and 350 parts by mass or less; and
a content of the cellulose derivative (C) with respect to 100 parts by mass of the copolymer (P) is 10 parts by mass or more and 350 parts by mass or less,

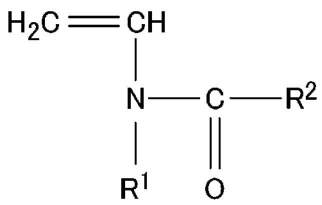

··· (1)

wherein in the formula, $R^1$ and $R^2$ each independently represent a hydrogen atom or an alkyl group having 1 to 5 carbon atoms.

**Patentansprüche**

**1.** Nichtwässrige Sekundärbatterieelektrode, umfassend:

einen Stromabnehmer und
eine Elektroden-Aktivmaterialschicht, die auf einer Oberfläche des Stromabnehmers ausgebildet ist,
wobei die Elektroden-Aktivmaterialschicht ein Elektroden-Aktivmaterial (A), ein Copolymer (P), ein nichtionisches oberflächenaktives Mittel (B) und ein Cellulosederivat (C) umfasst;
wobei das Copolymer (P) eine von einem (Meth)acrylsäuresalz abgeleitete Struktureinheit (p1) und eine von einer durch die allgemeine Formel (1) dargestellten Verbindung abgeleitete Struktureinheit (p2) umfasst;
wobei in dem Copolymer (P) der Gehalt der Struktureinheit (p1) 50 Massen-% oder mehr und 99 Massen-% oder weniger ist;
in dem Copolymer (P) der Gehalt der Struktureinheit (p2) 0,50 Massen-% oder mehr und 30 Massen-% oder weniger ist;
der Gehalt des nichtionischen oberflächenaktiven Mittels (B), bezogen auf 100 Massenteile des Copolymers (P), 5,0 Massenteile oder mehr und 350 Massenteile oder weniger beträgt; und
der Gehalt des Cellulosederivats (C), bezogen auf 100 Massenteile des Copolymers (P), 10 Massenteile oder mehr und 350 Massenteile oder weniger beträgt,

[Chemische Formel 1]

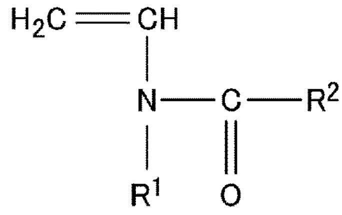

··· (1)

wobei in der Formel $R^1$ und $R^2$ jeweils unabhängig voneinander ein Wasserstoffatom oder eine Alkylgruppe mit 1 bis 5 Kohlenstoffatomen darstellen.

**2.** Nichtwässrige Sekundärbatterieelektrode nach Anspruch 1, wobei das Copolymer (P) eine wasserlösliche Polymerverbindung ist.

**3.** Nichtwässrige Sekundärbatterieelektrode nach Anspruch 1 oder 2, wobei der Gehalt des Elektroden-Aktivmaterials (A) in der Elektroden-Aktivmaterialschicht 90 Massen-% oder mehr und 99 Massen-% oder weniger ist.

**4.** Nichtwässrige Sekundärbatterieelektrode nach einem der Ansprüche 1 bis 3, wobei das Elektroden-Aktivmaterial (A) Silicium enthält.

**5.** Nichtwässrige Sekundärbatterieelektrode nach einem der Ansprüche 1 bis 4, wobei der Gehalt des Copolymers (P) in der Elektroden-Aktivmaterialschicht 0,15 Massen-% oder mehr und 8,5 Massen-% oder weniger ist.

**6.** Nichtwässrige Sekundärbatterieelektrode nach einem der Ansprüche 1 bis 5, wobei das nichtionische oberflächenaktive Mittel (B) ein Segment aufweist, das aus einer Ethylenoxidstruktur aufgebaut ist.

**7.** Nichtwässrige Sekundärbatterieelektrode nach einem der Ansprüche 1 bis 6, wobei der HLB-Wert des durch das Glyphinverfahren erhaltenen nichtionischen oberflächenaktiven Mittels (B) 8,0 oder mehr und 19 oder weniger beträgt.

**8.** Nichtwässrige Sekundärbatterieelektrode nach einem der Ansprüche 1 bis 7, wobei das Cellulosederivat (C) Carboxymethylcellulose oder ein Metallsalz davon ist.

**9.** Nichtwässrige Sekundärbatterieelektrode nach Anspruch 8, wobei der Veretherungsgrad der Carboxymethylcellulose oder deren Metallsalzes 0,5 oder mehr und 1,8 oder weniger beträgt.

**10.** Nichtwässrige Sekundärbatterieelektrode nach einem der Ansprüche 1 bis 9, wobei das gewichtsmittlere Molekulargewicht des Copolymers (P) im Bereich von 1,0 Millionen bis 5,0 Millionen liegt, gemessen wie in der Beschreibung beschrieben.

**11.** Nichtwässrige Sekundärbatterieelektrode nach einem der Ansprüche 1 bis 10, wobei das Copolymer (P) weiterhin eine von (Meth)acrylsäure abgeleitete Struktureinheit (p3) umfasst, und
der Gehalt der Struktureinheit (p3) in dem Copolymer (P) 1,0 Massen-% oder mehr und 30 Massen-% oder weniger ist.

**12.** Nichtwässrige Sekundärbatterie, welche die nichtwässrige Sekundärbatterieelektrode nach einem der Ansprüche 1 bis 11 als negative Elektrode aufweist.

**13.** Nichtwässrige Sekundärbatterie nach Anspruch 12, wobei die nichtwässrige Sekundärbatterie eine Lithiumionen-Sekundärbatterie ist.

**14.** Elektrodenbindemittelzusammensetzung, umfassend ein Copolymer (P), ein nichtionisches oberflächenaktives Mittel (B), ein Cellulosederivat (C) und ein wässriges Lösungsmittel,

wobei das Copolymer (P) eine von einem (Meth)acrylsäuresalz abgeleitete Struktureinheit (p1) und eine von

einer durch die allgemeine Formel (1) dargestellten Verbindung abgeleitete Struktureinheit (p2) umfasst; wobei in dem Copolymer (P) der Gehalt der Struktureinheit (p1) 50 Massen% oder mehr und 99 Massen-% oder weniger ist;
in dem Copolymer (P) der Gehalt der Struktureinheit (p2) 0,50 Massen-% oder mehr und 30 Massen-% oder weniger ist;
der Gehalt des nichtionischen oberflächenaktiven Mittels (B), bezogen auf 100 Masseteile des Copolymers (P), 5,0 Masseteile oder mehr und 350 Masseteile oder weniger beträgt; und
der Gehalt des Cellulosederivats (C), bezogen auf 100 Masseteile des Copolymers (P), 10 Masseteile oder mehr und 350 Masseteile oder weniger beträgt,

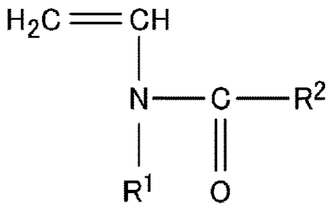 ··· (1)

wobei in der Formel $R^1$ und $R^2$ jeweils unabhängig voneinander ein Wasserstoffatom oder eine Alkylgruppe mit 1 bis 5 Kohlenstoffatomen darstellen.

**15.** Elektroden-Slurry, umfassend ein Elektroden-Aktivmaterial (A), ein Copolymer (P), ein nichtionisches oberflächenaktives Mittel (B), ein Cellulosederivat (C) und ein wässriges Medium,

wobei das Copolymer (P) eine von einem (Meth)acrylsäuresalz abgeleitete Struktureinheit (p1) und eine von einer durch die allgemeine Formel (1) dargestellten Verbindung abgeleitete Struktureinheit (p2) umfasst;
wobei in dem Copolymer (P) der Gehalt der Struktureinheit (p1) 50 Massen% oder mehr und 99 Massen-% oder weniger ist;
in dem Copolymer (P) der Gehalt der Struktureinheit (p2) 0,50 Massen-% oder mehr und 30 Massen-% oder weniger ist;
der Gehalt des nichtionischen oberflächenaktiven Mittels (B), bezogen auf 100 Masseteile des Copolymers (P), 5,0 Masseteile oder mehr und 350 Masseteile oder weniger beträgt; und
der Gehalt des Cellulosederivats (C), bezogen auf 100 Masseteile des Copolymers (P), 10 Masseteile oder mehr und 350 Masseteile oder weniger beträgt,

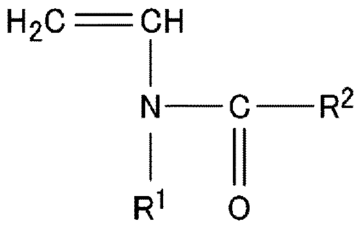 ··· (1)

wobei in der Formel $R^1$ und $R^2$ jeweils unabhängig voneinander ein Wasserstoffatom oder eine Alkylgruppe mit 1 bis 5 Kohlenstoffatomen darstellen.

**Revendications**

**1.** Électrode de batterie secondaire non aqueuse comprenant un collecteur de courant et

une couche de matériau actif d'électrode formée sur une surface du collecteur de courant,
dans laquelle la couche de matériau actif d'électrode comprend un matériau actif d'électrode (A), un copolymère (P), un tensioactif non ionique (B), et un dérivé de cellulose (C) ;
le copolymère (P) comprend une unité structurale (p1) dérivée d'un sel d'acide (méth)acrylique et une unité structurale (p2) dérivée d'un composé représenté par la formule générale (1) ; dans le copolymère (P), une teneur de l'unité structurale (p1) est de 50 % en masse ou plus et de 99 % en masse ou moins ;

dans le copolymère (P), une teneur de l'unité structurale (p2) est de 0,50 % en masse ou plus et de 30 % en masse ou moins ;
une teneur du tensioactif non ionique (B) par rapport à 100 parties en masse du copolymère (P) est de 5,0 parties en masse ou plus et de 350 parties en masse ou moins ; et
une teneur du dérivé de cellulose (C) par rapport à 100 parties en masse du copolymère (P) est de 10 parties en masse ou plus et de 350 parties en masse ou moins,

[Formule chimique 1]

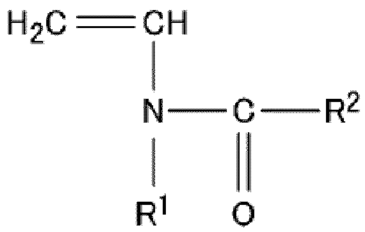

··· (1)

dans laquelle dans la formule, $R^1$ et $R^2$ représentent chacun indépendamment un atome d'hydrogène ou un groupe alkyle comportant 1 à 5 atomes de carbone.

2. Électrode de batterie secondaire non aqueuse selon la revendication 1, dans laquelle le copolymère (P) est un composé de polymère soluble dans l'eau.

3. Électrode de batterie secondaire non aqueuse selon la revendication 1 ou 2, dans laquelle une teneur du matériau actif d'électrode (A) dans la couche de matériau actif d'électrode est de 90 % en masse ou plus et de 99 % en masse ou moins.

4. Électrode de batterie secondaire non aqueuse selon l'une quelconque des revendications 1 à 3, dans laquelle le matériau actif d'électrode (A) comprend du silicium.

5. Électrode de batterie secondaire non aqueuse selon l'une quelconque des revendications 1 à 4, dans laquelle une teneur du copolymère (P) dans la couche de matériau actif d'électrode est de 0,15 % en masse ou plus et de 8,5 % en masse ou moins.

6. Électrode de batterie secondaire non aqueuse selon l'une quelconque des revendications 1 à 5, dans laquelle le tensioactif non ionique (B) a un segment composé d'une structure d'oxyde d'éthylène.

7. Électrode de batterie secondaire non aqueuse selon l'une quelconque des revendications 1 à 6, dans laquelle une valeur HLB du tensioactif non ionique (B) obtenue par le procédé à la glyphine est de 8,0 ou plus et de 19 ou moins.

8. Électrode de batterie secondaire non aqueuse selon l'une quelconque des revendications 1 à 7, dans laquelle le dérivé de cellulose (C) est de la carboxyméthyl cellulose ou un sel de métal de celle-ci.

9. Électrode de batterie secondaire non aqueuse selon la revendication 8, dans laquelle un degré d'éthérification de la carboxyméthyl cellulose ou de son sel de métal est de 0,5 ou plus et de 1,8 ou moins.

10. Électrode de batterie secondaire non aqueuse selon l'une quelconque des revendications 1 à 9, dans laquelle un poids moléculaire moyen en poids du copolymère (P) est dans la plage de 1,0 million à 5,0 millions, mesuré tel que décrit dans la description.

11. Électrode de batterie secondaire non aqueuse selon l'une quelconque des revendications 1 à 10, dans laquelle le copolymère (P) comprend en outre une unité structurale (p3) dérivée de l'acide (méth)acrylique, et
une teneur de l'unité structurale (p3) dans le copolymère (P) est de 1,0 % en masse ou plus et de 30 % en masse ou moins.

12. Batterie secondaire non aqueuse comprenant l'électrode de batterie secondaire non aqueuse selon l'une quelconque des revendications 1 à 11 en tant qu'électrode négative.

**13.** Batterie secondaire non aqueuse selon la revendication 12, dans laquelle la batterie secondaire non aqueuse est une batterie secondaire au lithium-ion.

**14.** Composition de liant d'électrode comprenant un copolymère (P), un tensioactif non ionique (B), un dérivé de cellulose (C), et un solvant aqueux,

dans laquelle le copolymère (P) comprend une unité structurale (p1) dérivée d'un sel d'acide (méth)acrylique et une unité structurale (p2) dérivée d'un composé représenté par formule générale (1) ;
dans le copolymère (P), une teneur de l'unité structurale (p1) est de 50 % en masse ou plus et de 99 % en masse ou moins ;
dans le copolymère (P), une teneur de l'unité structurale (p2) est de 0,50 % en masse ou plus et de 30 % en masse ou moins ;
une teneur du tensioactif non ionique (B) par rapport à 100 parties en masse du copolymère (P) est de 5,0 parties en masse ou plus et de 350 parties en masse ou moins ; et
une teneur du dérivé de cellulose (C) par rapport à 100 parties en masse du copolymère (P) est de 10 parties en masse ou plus et de 350 parties en masse ou moins,

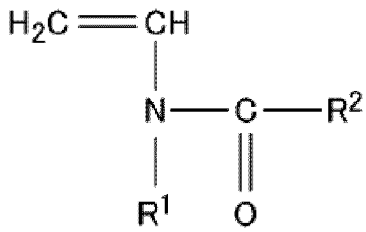

··· (1)

dans laquelle dans la formule, $R^1$ et $R^2$ représentent chacun indépendamment un atome d'hydrogène ou un groupe alkyle comportant 1 à 5 atomes de carbone.

**15.** Pâte d'électrode comprenant un matériau actif d'électrode (A), un copolymère (P), un tensioactif non ionique (B), un dérivé de cellulose (C), et un milieu aqueux,

dans laquelle le copolymère (P) comprend une unité structurale (p1) dérivée d'un sel d'acide (méth)acrylique et une unité structurale (p2) dérivée d'un composé représenté par formule générale (1) ;
dans le copolymère (P), une teneur de l'unité structurale (p1) est de 50 % en masse ou plus et de 99 % en masse ou moins ;
dans le copolymère (P), une teneur de l'unité structurale (p2) est de 0,50 % en masse ou plus et de 30 % en masse ou moins ;
une teneur du tensioactif non ionique (B) par rapport à 100 parties en masse du copolymère (P) est de 5,0 parties en masse ou plus et de 350 parties en masse ou moins ; et
une teneur du dérivé de cellulose (C) par rapport à 100 parties en masse du copolymère (P) est de 10 parties en masse ou plus et de 350 parties en masse ou moins,

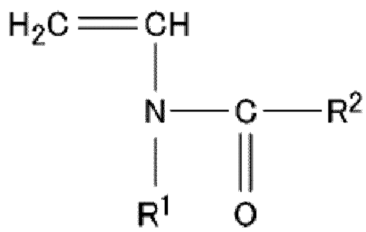

··· (1)

dans laquelle dans la formule, $R^1$ et $R^2$ représentent chacun indépendamment un atome d'hydrogène ou un groupe alkyle comportant 1 à 5 atomes de carbone.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015023015 A
- WO 2017150200 A